# EUROPÄISCHE PATENTSCHRIFT

(11) **EP 1 544 367 B1**
(45) Veröffentlichungstag und Bekanntmachung des Hinweises auf die Patenterteilung: **18.02.2009**
(21) Anmeldenummer: 04029733.5
(22) Anmeldetag: 15.12.2004
(51) Int. Cl.: E04B 1/80

(54) **Verbundwärmedämmplatte**
Laminated heat insulating panel
Panneau isolant thermique stratifié

(30) Priorität: 15.12.2003 DE 10359005
(43) Veröffentlichungstag der Anmeldung: 22.06.2005
(73) Patentinhaber: va-Q-tec AG, 97080 Würzburg (DE); Variotec Sandwichelemente GmbH & Co. KG, 92318 Neumarkt (DE)
(72) Erfinder: Caps, Roland, 63839 Kleinwallstadt (DE); Stölzel, Christof, 923 18 Neumarkt (DE)
(74) Vertreter: Zinnecker, Armin

(56) Entgegenhaltungen:
- DE-A1- 10 213 058
- DE-A1- 19 915 456
- DE-A1- 19 923 057
- DE-C1- 10 215 213
- US-A- 3 993 811
- US-A- 5 500 305

## Beschreibung

Die Erfindung betrifft eine Verbundwärmedämmplatte nach dem Oberbegriff des Anspruchs 1 und ein Verfahren zur Herstellung einer derartigen Verbundwärmedämmplatte sowie ein Verfahren zum Verarbeiten einer derartigen Verbundwärmedämmplatte.

Im Bauwesen sind tragende Wandelemente bekannt, die als Kern eine Dämmschicht enthalten und die auf beiden Seiten von Betonplatten umgeben sind. Die Betonplatten werden durch Verbundanker sicher zusammengehalten. Weiterhin bekannt sind evakuierte Dämmplatten mit einem Dämmkern aus mikroporöser Kieselsäure und einer Umhüllung aus einer metallisierten Kunststoffolie. Die Vorteile solcher Wandelemente, die einen Dämmkern aus evakuierten Materialien enthalten, sind ein hoher Dämmwert bei einem schlanken Wandaufbau. Mit nur 40 mm Vakuumdämmung aus mikroporöser Kieselsäure läßt sich im Wandaufbau ein U-Wert von 0,11 W/m²K erreichen.

Aus der DE 102 15 213 C1 ist eine Verbundwärmedämmplatte mit einer Vakuumdämmplatte und einer vakuumdichten Umhüllung bekannt. Derartige evakuierte Wärmedämmplatten erzielen mit kleinen Dämmstärken eine hohe Dämmwirkung.

Sie umfassen in der Regel eine Vakuumdämmplatte aus einem evakuierbaren, porösen Kernmaterial geringer Wärmeleitfähigkeit und einer vakuumdichten Umhüllung, insbesondere einer metallisierten Hochbarrierefolie aus Kunststoff. Als Material für den aus der Vakuumdämmplatte bestehenden Kern kommen mikroporöse Kieselsäurepulver oder offenporige Schäume aus Polyurethan oder Polystyrol in Betracht. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Beim Einsatz von Vakuumdämmplatten im Baubereich ist es allerdings in vielen Fällen wünschenswert oder erforderlich, einige Randbedingungen zu beachten: Die Vakuumdämmplatten dürfen nicht längere Zeit einer erhöhten Feuchtigkeit ausgesetzt werden. Das Verarbeiten der Vakuumdämmplatten ist nur mit großer Vorsicht möglich, da die empfindliche Folie leicht zerstört werden kann. Eine einfache Kontrolle, ob die Vakuumdämmplatte die Herstellung der Bauelemente unbeschadet überstanden hat, ist bisher nicht möglich.

Rechnerisch sind zwar Nutzungsdauern von 50 Jahren und mehr mit Vakuumdämmplatten im Baubereich möglich, wenn bei der Herstellung entsprechend gute Hochbarrierefolien und mikroporöse, gut getrocknete Dämmkerne verwendet werden. Während der Weiterverarbeitung der Vakuumdämmplatten können jedoch ungewollt Beschädigungen auftreten, die meist nicht einfach erkannt werden können. Eine Kontrolle von Verbundelementen vor dem Einbau in ein Bauobjekt ist daher wünschenswert oder erforderlich.

Aus der DE-A 102 13 058 und aus der US-A-5 500 305 sind Verbundwärmedämmplatten nach dem Oberbegriff des Anspruchs 1 bekannt.

Aufgabe der Erfindung ist es, eine verbesserte Verbundwärmeplatte und ein Verfahren zu deren Herstellung und Verarbeitung vorzuschlagen.

Erfindungsgemäß wird diese Aufgabe durch eine Verbundwärmedämmplatte mit den Merkmalen des Anspruchs 1 gelöst. Die Verbundwärmedämmplatte umfaßt eine oder mehrere Vakuumdämmplatten und eine Umhüllung. Die Vakuumdämmplatten liegen vorzugsweise nebeneinander. Sie sind zur Bildung eines Vakuums innerhalb der vorzugsweise vakuumdichten Umhüllung evakuiert. Erfindungsgemäß sind die Vakuumdämmplatten beidseitig von Kunststoffschaum umgeben. Bei dem Kunststoffschaum handelt es sich vorzugsweise um Polyurethanschaum. Zur Herstellung der Verbundwärmedämmplatte können die Vakuumdämmplatten beidseitig von Kunststoffschaum bzw. Polyurethanschaum umschäumt werden.

Vorteilhafte Weiterbildungen sind in den Unteransprüchen beschrieben.

Der Kunststoffschaum bzw. Polyurethanschaum ist von einer Aluminiumfolie abgedeckt.

Die vakuumdichte Umhüllung bzw. die Aluminiumfolie ist von mindestens einer weiteren Platte abgedeckt. Die weitere Platte besteht vorzugsweise aus Kunststoffschaum. Vorteilhaft ist es, wenn die weitere Platte aus Polyurethanschaum, vorzugsweise gepreßtem Polyurethanschaum; besteht. Sie kann allerdings auch aus einem anderen Werkstoff mit niedriger Wärmeleitfähigkeit hergestellt sein. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie ist vorzugsweise aus Kunststoff. Vorzugsweise ist die Hochbarrierefolie wasserdampfdicht. Vorteilhaft ist es, wenn die Hochbarrierefolie U-förmig ausgestaltet ist. Die Hochbarrierefolie wirkt vorzugsweise als Diffusionssperrschicht.

Vorteilhaft ist es, wenn die Hochbarrierefolie an der Umhüllung bzw. der Aluminiumfolie anliegt. Die Hochbarrierefolie ist vorzugsweise mit der Umhüllung bzw. der Aluminiumfolie verklebt. Vorteilhaft ist es, wenn die Hochbarrierefolie U-förmig ist und die Schenkel der Hochbarrierefolie an der Umhüllung bzw. der Aluminiumfolie anliegen bzw. mit der Umhüllung bzw. der Aluminiumfolie verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie bzw. Hochbarriere-Kunststoffolie herumgelegt werden, vorzugsweise als Diffusionssperrschicht. Die Schenkel der Hochbarrierefolie können mit der Umhüllung bzw. der Aluminiumfolie verklebt werden, so daß der Innenraum gut gegen eindringende Feuchtigkeit geschützt ist.

An oder in einer oder mehreren oder allen Vakuumdämmplatten kann ein Sensor zur Überprüfung des Gasdrucks angebracht sein. Der Sensor kann über elektrische Zuleitungen ausgelesen werden. Bei dem Sensor kann es sich insbesondere um eine Meßplatte nach der DE 102 15 213 C1 handeln.

Eine oder mehrere oder alle Vakuumdämmplatten können Aussparungen aufweisen, in die Verankerungselemente eingesetzt werden oder sind. Zur Herstellung dieser vorteilhaften Weiterbildung können an Stellen, an denen Aussparungen in den Vakuumdämmplatten vorhanden sind, durch die Verbundwärmedämmplatte hindurch Löcher gefräst und dort Verankerungselemente eingesetzt werden. Die Verankerungselemente sind vorzugsweise aus Kohlefaser, Glasfaser oder vergleichbaren Werkstoffen mit niedriger Wärmeleitung wie beispielsweise Wood Composites Plastic hergestellt.

Die Verbundwärmedämmplatte mit den Verankerungselementen kann auf eine Betonplatte, insbesondere auf eine frisch gegossene Betonplatte, setzbar oder gesetzt sein. Die andere Seite der Verbundwärmedämmplatte kann ebenfalls mit Beton ausgefüllt werden oder sein, vorzugsweise in einer Betonschalung. Die Verankerungselemente können dabei eine innige Verbindung mit der Betonplatte und/oder dem Beton und/oder der Betonschalung eingehen. Wenn die Verbundwärmedämmplatte mit ihrer unteren Seite auf die vorzugsweise frisch gegossene Betonplatte gesetzt wird, wird ihre obere Seite in der beschriebenen Weise vorzugsweise in einer Betonschalung mit Beton ausgefüllt.

Eine weitere vorteilhafte Weiterbildung ist dadurch gekennzeichnet, daß die Verbundwärmedämmplatte mit einer Innenplatte und mit einer Außenplatte verbunden ist. Die Innenplatte und/oder die Außenplatte können aus Beton oder aus Holz oder aus einem Holzwerkstoff, insbesondere aus Dickholz, bestehen. Beispielsweise kann die Innenplatte aus Dickholz und die Außenplatte aus einem Holzwerkstoff bestehen. Es ist allerdings auch möglich, eine Betonplatte mit einer Dickholzplatte bzw. Holzwerkstoffplatte zu kombinieren. Die Verbindung der Verbundwärmedämmplatte mit der Innenplatte und/oder der Außenplatte erfolgt vorzugsweise durch Verkleben. Die Innenplatte und/oder die Außenplatte können mit der Verbundwärmedämmplatte zusätzlich über die aus der Verbundwärmedämmplatte herausstehenden Anker verbunden werden.

Ein Verfahren zur Herstellung einer erfindungsgemäßen Verbundwärmedämmplatte ist erfindungsgemäß dadurch gekennzeichnet, daß eine oder mehrere evakuierte Vakuumdämmplatten beidseitig von Kunststoffschaum, vorzugsweise Polyurethanschaum, umschäumt werden.

Ein Verfahren zum Verarbeiten einer erfindungsgemäßen Verbundwärmedämmplatte ist erfindungsgemäß dadurch gekennzeichnet, daß die Verbundwärmedämmplatte auf eine frisch gegossene Betonplatte gesetzt wird. Die andere bzw. obere Seite der Verbundwärmedämmplatte wird vorzugsweise mit Beton, vorzugsweise in einer Betonschalung, ausgefüllt. Vorteilhaft ist es, wenn die Verbundwärmedämmplatte Verankerungselemente aufweist, die eine innige Verbindung mit dem Beton bzw. den Betonschalungen eingehen.

Durch die Erfindung wird eine Verbundwärmedämmplatte mit einer oder mehreren Vakuumdämmplatten als Kern und einer beidseitigen Umschäumung mit Kunststoffschaum, vorzugsweise Polyurethanschaum, geschaffen. Durch die erfindungsgemäße Ausgestaltung kann ein zusätzlicher Feuchtigkeitsschutz erreicht werden. Ferner ist es möglich, die Verbundwärmedämmplatte mit tragenden Platten aus Beton und/oder Holzwerkstoffen zu kombinieren. Schließlich wird eine integrierte Kontrolle der Güte der Vakuumdämmplatten ermöglicht.

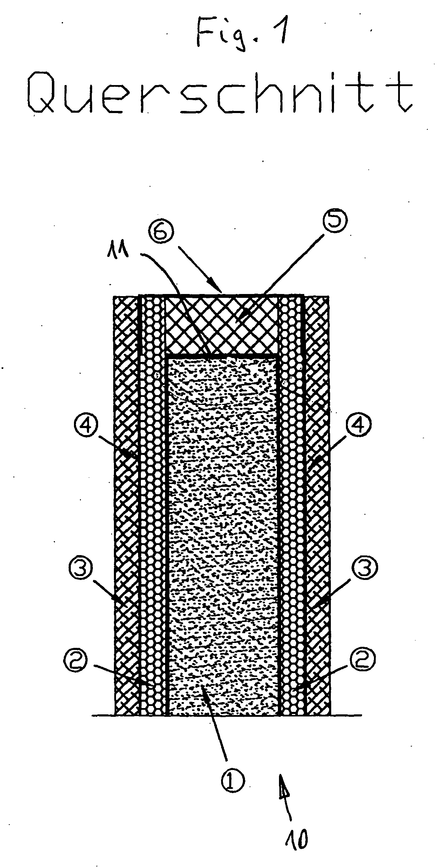

Ausführungsbeispiele der Erfindung werden nachstehend anhand der beigefügten Zeichnung im einzelnen erläutert. In der Zeichnung zeigt
- Fig. 1: eine Verbundwärmedämmplatte in einem Querschnitt,

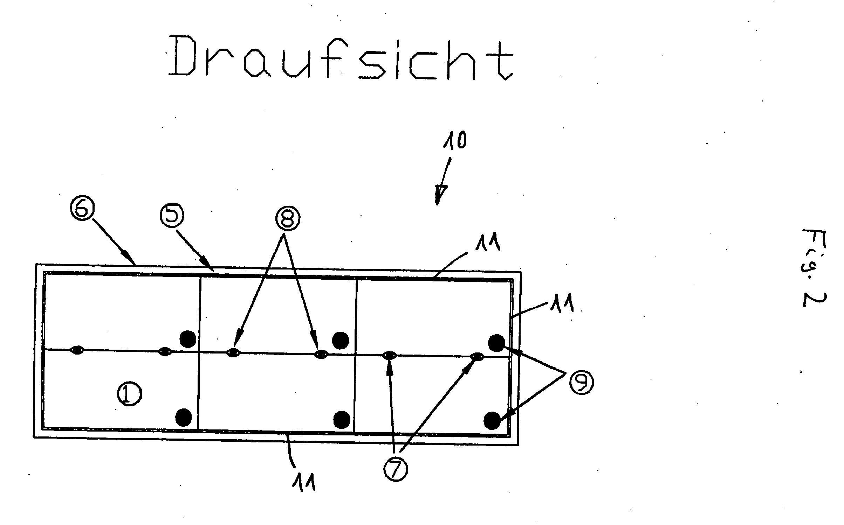

- Fig. 2: die Verbundwärmedämmplatte gemäß Fig. 1 in einer Draufsicht,
- Fig. 3: die Verbundwärmedämmplatte gemäß Fig. 1 und 2 im eingebauten Zustand in einer perspektivischen Ansicht,
- Fig. 4: eine Abwandlung des Einbaus der Verbundwärmedämmplatte gemäß Fig. 1 bis 3 in einer perspektivischen Ansicht und
- Fig. 5: eine weitere Abwandlung des Einbaus der Verbundwärmedämmplatte gemäß Fig. 1 bis 4 in einer perspektivischen Ansicht.

Die in den Zeichnungsfiguren gezeigte Verbundwärmedämmplatte 10 umfaßt sechs Vakuumdämmplatten 1, die in einem Rechteck nebeneinander angeordnet sind, und zwar in zwei Reihen zu je drei Vakuumdämmplatten 1. Die Vakuumdämmplatten 1 sind beidseitig von Polyurethanschaum 2 in einer Stärke zwischen 5 mm und 50 mm, bevorzugt 10 mm, umgeben bzw. umschäumt. Der Polyurethanschaum 2 ist seinerseits jeweils von einer vorzugsweise vakuumdichten Umhüllung 4, nämlich einer Aluminiumfolie in einer Stärke von 0,05 mm bis 0,5 mm abgedeckt.

Die Außenkanten 11 der Vakuumdämmplatten 1 sind von einem druckstabilen Konstruktionsschaum aus Polyurethan (Konstruktions-Polyurethanschaum) 5 umgeben. Der druckstabile Konstruktionsschaum 5 sitzt an den Außenkanten 11 der Vakuumdämmplatten 1. Er ist nach außen hin von einer wasserdampfdichten Hochbarrierefolie 6 umgeben. Die Hochbarrierefolie 6 ist U-förmig. Sie umgibt die Außenkanten des druckstabilen Konstruktionsschaums 5, und zwar derart, daß die Basis der Hochbarrierefolie 6 an den Außenkanten bzw. Außenflächen des druckstabilen Konstruktionsschaums 5 anliegt und die Schenkel jeweils außen an dem Polyurethanschaum 2 anliegen. Die Schenkel der U-förmigen Hochbarrierefolie 6 liegen an der Aluminiumfolie 4 an. Sie sind mit der Aluminiumfolie 4 verklebt. Die Aluminiumfolien 4 und die Hochbarrierefolien 6, die zusammen die Umhüllung bilden, verhindern, daß Feuchtigkeit an die Vakuumdämmplatten 1 gelangt. Diese Feuchtigkeit könnte ansonsten auf Dauer die Funktion der Vakuumdämmplatten 1 schädigen und deren Lebensdauer verkürzen.

Die Umhüllung, nämlich die Aluminiumfolie 4, ist beidseitig von einer weiteren Platte 3 abgedeckt. Die weiteren Platten 3 sind auf die Aluminiumfolien 4 nach außen hin aufgeklebt. Sie bestehen aus massivem, gepreßtem Polyurethanschaum in einer Stärke von 5 mm bis 20 mm, bevorzugt 10 mm. Die weiteren Platten verbessern die mechanische Stabilität der Verbundwärmedämmplatte beim Weiterverarbeiten und verhindern eine ungewollte Beschädigung der vakuumdichten Umhüllung, nämlich der Aluminiumfolien 4 und damit letztlich auch der Vakuumdämmplatten 1.

Um die Vakuumdämmplatten 1 auch in ihrem Verbund in der Verbundwärmedämmplatte 10 auf ihre Funktionsfähigkeit prüfen zu können, werden einzelne oder alle Vakuumdämmplatten 1 mit jeweils einem Sensor 9 ausgerüstet. Es handelt sich um das Sensorsystem, das in der DE 102 15 213 C1 beschrieben ist und auf das Bezug genommen wird. Als Sensor bzw. Meßkopf kann allerdings auch eine vereinfachte Version verwendet werden, die nur aus einer Heizfolie mit zwei Zuleitungen besteht. Die Heizfolie wird an der Stelle der Vakuumdämmplatte 1 befestigt, an der sich die interne Sensorscheibe 9 befindet. Über eine an die beiden elektrischen Zuleitungen angeschlossene externe Auswerteeinheit kann die Leistung der Heizfolie während des Meßvorgangs verfolgt und daraus die Güte des Vakuums in der Vakuumdämmplatte, die auch als Paneel bezeichnet werden kann, bestimmt werden. Damit kann nach der Herstellung der Verbundwärmedämmplatte 10 und vor dem Einbau in das Bauobjekt die Funktionsfähigkeit der Vakuumdämmplatten überprüft werden. Ferner ist auch eine nachträgliche Kontrolle, auch Jahre nach dem Einbau, grundsätzlich möglich.

Die Verbundwärmedämmplatte 10 ist mit Verankerungselementen 7 ausgestattet, die es ermöglichen, zusätzliche Bauelemente auf beiden Seiten der Verbundwärmedämmplatte anzubringen. Hierzu weisen die Vakuumdämmplatten 1 Aussparungen 8 auf. Die Aussparungen 8 können im Inneren oder an den Rändern der Vakuumdämmplatten 1 vorgesehen sein. Sie können ovalförmig ausgestaltet sein. An den Stellen, an denen sich die Aussparungen 8 in den Vakuumdämmplatten 1 befinden, werden Löcher gefräst. Anschließend werden die Verankerungselemente 7 durchgesteckt. Um an den Durchstoßstellen der Aluminiumfolie 4 einen erhöhten Feuchtedurchgang zu unterbinden, können diese Stellen mit einem Dichtmittel abgedichtet werden. Bei einer Stärke der Verbundwärmedämmplatte 10 von 80 mm beträgt der Wärmedurchgangskoeffizient 0,11 W/m²K. Eine derartige Verbundwärmedämmplatte ist für die Konstruktion von Passivhauswänden geeignet.

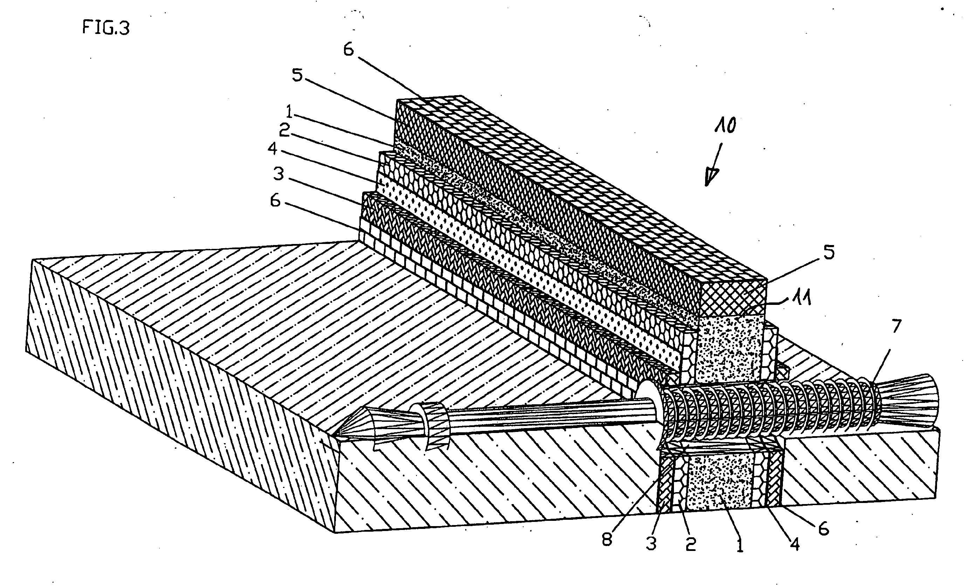

Bei der Ausführungsform nach Fig. 3 wird die Verbundwärmedämmplatte 10 mit den Verankerungselementen 7 auf eine frisch gegossene Betonplatte gesetzt. Die obere Seite der Verbundwärmedämmplatte 10 wird ebenfalls in einer Betonschalung mit Beton ausgefüllt. Dabei gehen die Ankerelemente 7 eine innige Verbindung mit den Betonschalen ein. Wie in Fig. 3 gezeigt können die Verbundwärmedämmplatten 10 beidseitig in einer Schalung mit Beton ausgegossen werden, wobei die Kanten frei bleiben können.

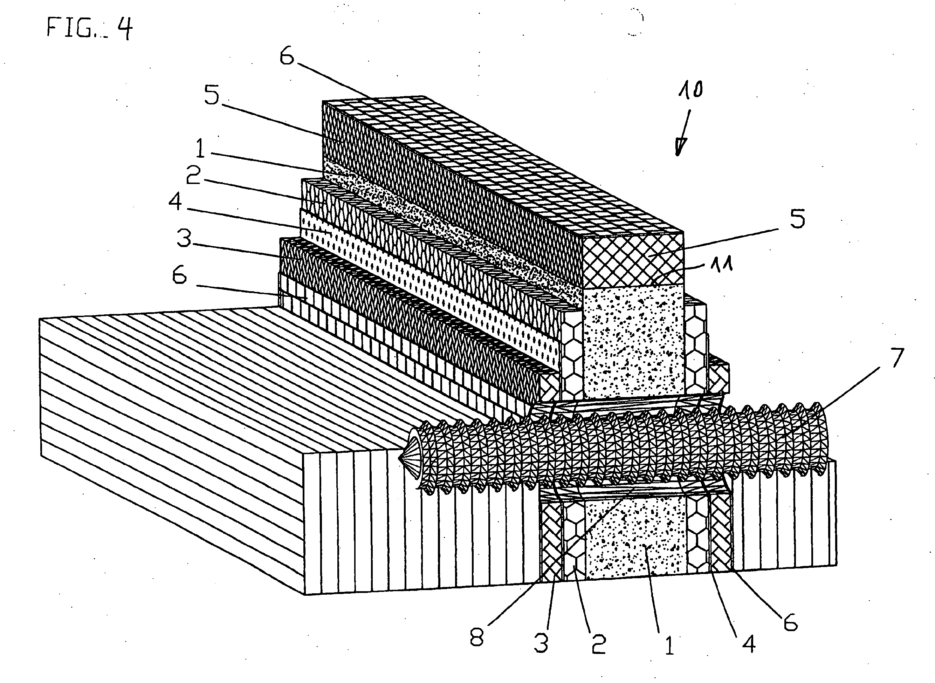

Es ist allerdings auch möglich, wie in Fig. 4 dargestellt, auf beide Seiten der Verbundwärmedämmplatte 10 einen Holzwerkstoff oder Dickholz anzubringen, wobei die Innenplatte und die Außenplatte über die Verankerungen 7 zusätzlich gesichert werden können.

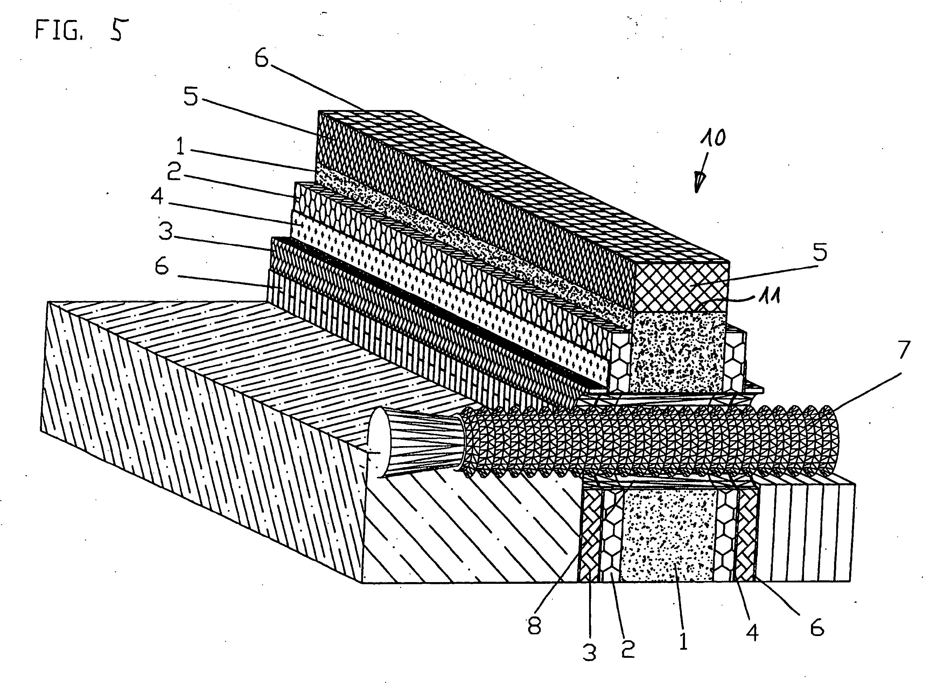

In Fig. 5 ist eine Kombination von Holzwerkstoff und Beton gezeigt.

Als Umhüllung 4 und/oder Hochbarrierefolie 6 können auch ein bedampftes Vliesbuthylband oder Gewebeband verwendet werden, um einen besseren mechanischen Schutz mit entsprechend höherer Festigkeit für die Kantensicherheit zu erreichen.

## Patentansprüche

1. Verbundwärmedämmplatte (10) mit einer oder mehreren Vakuumdämmplatten (1) und einer Umhüllung (4, 6), wobei die Vakuumdämmplatten (1) beidseitig von Kunststoffschaum (2) umgeben sind,
**dadurch gekennzeichnet,**
**daß** der Kunststoffschaum (2) von einer der als eine Aluminiumfolie (4) gestalteten Umhüllung abgedeckt ist
und **daß** die Umhüllung (4) von einer weiteren Platte (3) abgedeckt ist.

2. Verbundwärmedämmplatte nach Anspruch 1, **dadurch gekennzeichnet, daß** der Kunststoffschaum Polyurethanschaum (2) ist.

3. Verbundwärmedämmplatte nach Anspruch 1 oder 2, **dadurch gekennzeichnet, daß** die Außenkanten (11) der Vakuumdämmplatten (1) von einem druckstabilen Konstruktionsschaum (5) umgeben sind.

4. Verbundwärmedämmplatte nach einem der vorhergehenden Ansprüche, **dadurch gekennzeichnet, daß** die Außenkanten der Vakuumdämmplatten (1) bzw. des druckstabilen Konstruktionsschaums (5) von einer Hochbarrierefolie (6) umgeben sind.

5. Verbundwärmedämmplatte nach Anspruch 4, **dadurch gekennzeichnet, daß** die Hochbarrierefolie (6) an der Umhüllung bzw. der Aluminiumfolie (4) anliegt.

6. Verbundwärmedämmplatte nach einem der vorhergehenden Ansprüche, **dadurch gekennzeichnet, daß** an oder in einer oder mehreren oder allen Vakuumdämmplatten (1) ein Sensor (9) zur Überprüfung des Gasdrucks angebracht ist.

7. Verbundwärmedämmplatte nach einem der vorhergehenden Ansprüche, **dadurch gekennzeichnet, daß** eine oder mehrere oder alle Vakuumdämmplatten (1) Aussparungen (8) aufweisen, in die Verankerungselemente (7) eingesetzt sind.

8. Verbundwärmedämmplatte nach Anspruch 7, **dadurch gekennzeichnet, daß** die Verbundwärmedämmplatte (10) mit den Verankerungselementen (7) auf eine Betonplatte setzbar oder gesetzt ist.

9. Verbundwärmedämmplatte nach Anspruch 8, **dadurch gekennzeichnet, daß** die andere Seite der Verbundwärmedämmplatte (10) mit Beton ausgefüllt ist.

10. Verbundwärmedämmplatte nach einem der vorhergehenden Ansprüche, **dadurch gekennzeichnet, daß** die Verbundwärmedämmplatte (10) mit einer Innenplatte und mit einer Außenplatte verbunden ist.

11. Verfahren zur Herstellung einer Verbundwärmedämmplatte (10) nach einem der Ansprüche 1 bis 10,
**dadurch gekennzeichnet,**
**daß** eine oder mehrere evakuierte Vakuumdämmplatten (1) beidseitig von Kunststoffschaum (2) umschäumt werden, daß der Kunststoffschaum (2) von einer Aluminiumfolie (4) abgedeckt wird und daß die Umhüllung (4) von einer weiteren Platte (3) abgedeckt wird.

12. Verfahren zum Verarbeiten einer Verbundwärmedämmplatte (10) nach einem der Ansprüche 1 bis 10,
**dadurch gekennzeichnet,**
**daß** die Verbundwärmedämmplatte (10) auf eine frisch gegossene Betonplatte gesetzt wird.

13. Verfahren nach Anspruch 12, **dadurch gekennzeichnet, daß** die andere Seite der Verbundwärmedämmplatte (10) mit Beton ausgefüllt wird.

14. Verfahren nach Anspruch 12 oder 13, **dadurch gekennzeichnet, daß** die Verbundwärmedämmplatte (10) Verankerungselemente (7) aufweist, die eine innige Verbindung mit dem Beton eingeht.

## Claims

1. Composite heat-insulating board (10) having one or more vacuum insulation boards (1) and a casing (4, 6), the vacuum insulation boards (1) being surrounded on both sides by plastic foam (2),
**characterized**
**in that** the plastic foam (2) is covered by the casing configured as an aluminium foil (4),
and **in that** the casing (4) is covered by a further board (3).

2. Composite heat-insulating board according to Claim 1, **characterized in that** the plastic foam is polyurethane foam (2).

3. Composite heat-insulating board according to Claim 1 or 2, **characterized in that** the outer edges (11) of the vacuum insulation boards (1) are surrounded by a pressure-stable construction foam (5).

4. Composite heat-insulating board according to one of the preceding claims, **characterized in that** the outer edges of the vacuum insulation boards (1) or of the pressure-stable construction foam (5) are surrounded by a high-barrier foil (6).

5. Composite heat-insulating board according to Claim 4, **characterized in that** the high-barrier foil (6) bears against the casing or the aluminium foil (4).

6. Composite heat-insulating board according to one of the preceding claims, **characterized in that** on or in one or more or all of the vacuum insulation boards (1), a sensor (9) is fitted for monitoring the gas pressure.

7. Composite heat-insulating board according to one of the preceding claims, **characterized in that** one or more or all of the vacuum insulation boards (1) have cavities (8), in which anchoring elements (7) are inserted.

8. Composite heat-insulating board according to Claim 7, **characterized in that** the composite heat-insulating board (10) with the anchoring elements (7) is placeable or placed onto a concrete slab.

9. Composite heat-insulating board according to Claim 8, **characterized in that** the other side of the composite heat-insulating board (10) is full of concrete.

10. Composite heat-insulating board according to one of the preceding claims, **characterized in that** the composite heat-insulating board (10) is connected to an inner board and to an outer board.

11. Method for producing a composite heat-insulating board (10) according to one of Claims 1 to 10,
**characterized in that**
one or more evacuated vacuum insulation boards (1) are encased on both sides by plastic foam (2), **in that** the plastic foam (2) is covered by an aluminium foil (4), and **in that** the casing (4) is covered by a further board (3).

12. Method for treating a composite heat-insulating board (10) according to one of Claims 1 to 10,
**characterized**
**in that** the composite heat-insulating board (10) is placed onto a freshly cast concrete slab.

13. Method according to Claim 12, **characterized in that** the other side of the composite heat-insulating board (10) is filled with concrete.

14. Method according to Claim 12 or 13, **characterized in that** the composite heat-insulating board (10) has anchoring elements (7), which enter into an intimate connection with the concrete.

## Revendications

1. Panneau isolant thermique stratifié (10) avec une ou plusieurs plaques isolantes à vide (1) et une enveloppe (4, 6), où les plaques isolantes à vide (1) sont entourées des deux côtés par de la mousse de matériau synthétique (2),
**caractérisé**
**en ce que** la mousse de matériau synthétique (2) est recouverte par l'enveloppe réalisée en feuille d'aluminium (4),
et **en ce que** l'enveloppe (4) est recouverte par une autre plaque (3).

2. Panneau isolant thermique stratifié selon la revendication 1, **caractérisé en ce que** la mousse de matériau synthétique est de la mousse de polyuréthane (2).

3. Panneau isolant thermique stratifié selon la revendication 1 ou 2, **caractérisé en ce que** les arêtes extérieures (11) des plaques isolantes à vide (1) sont entourées par une mousse de construction (5) stable à la pression.

4. Panneau isolant thermique stratifié selon l'une des revendications précédentes, **caractérisé en ce que** les arêtes extérieures des plaques isolantes à vide (1), respectivement de la mousse de construction (5) stable à la pression sont entourées par une feuille formant haute barrière (6).

5. Panneau isolant thermique stratifié selon la revendication 4, **caractérisé en ce que** la feuille formant haute barrière (6) s'applique à l'enveloppe, respectivement, à la feuille d'aluminium (4).

6. Panneau isolant thermique stratifié selon l'une des revendications précédentes, **caractérisé en ce qu'**est disposé à ou dans une ou plusieurs ou toutes les plaques isolantes à vide (1) un capteur (9) pour la vérification de la pression du gaz.

7. Panneau isolant thermique stratifié selon l'une des revendications précédentes, **caractérisé en ce qu'**une ou plusieurs ou toutes les plaques isolantes à vide (1) présentent des évidements (8) dans lesquels sont placés des éléments d'ancrage (7).

8. Panneau isolant thermique stratifié selon la revendication 7, **caractérisé en ce que** le panneau isolant thermique stratifié (10) va être ou est placé avec les éléments d'ancrage (7) sur une plaque de béton.

9. Panneau isolant thermique stratifié selon la revendication 8, **caractérisé en ce que** l'autre côté du panneau isolant thermique stratifié (10) est rempli avec du béton.

10. Panneau isolant thermique stratifié selon l'une des revendications précédentes, **caractérisé en ce que** le panneau isolant thermique stratifié (10) est relié à une plaque intérieure et à une plaque extérieure.

11. Procédé de fabrication d'un panneau isolant thermique stratifié (10) selon l'une des revendications 1 à 10, **caractérisé en ce qu'**une ou plusieurs plaques d'isolation à vide évacuées (1) sont entourées des deux côtés par de la mousse de matériau synthétique (2), **en ce que** la mousse de matériau synthétique (2) est recouverte par une feuille d'aluminium (4) et **en ce que** l'enveloppe (4) est recouverte par une autre plaque (3).

12. Procédé de mise en oeuvre d'un panneau isolant thermique stratifié (10) selon l'une des revendications 1 à 10, **caractérisé en ce que** le panneau isolant thermique stratifié (10) est placé sur une plaque de béton fraîchement coulée.

13. Procédé selon la revendication 12, **caractérisé en ce que** l'autre côté du panneau isolant thermique stratifié (10) est rempli de béton.

14. Procédé selon la revendication 12 ou 13, **caractérisé en ce que** le panneau isolant thermique stratifié (10) présente des éléments d'ancrage (7) qui entrent en liaison étroite avec le béton.
